# EUROPEAN PATENT APPLICATION

(11) **EP 2 025 303 A1**
(43) Date of publication of application: **18.02.2009**
(21) Application number: 08161861.3
(22) Date of filing: 05.08.2008
(51) Int. Cl.: A61C 8/00, A61C 13/00

(54) **Method for manufacturing the one body abutment of an implant**

(30) Priority: 17.08.2007 KR 20070082916
(71) Applicant: Kim, Jung Han, Seoul 135-906 (KR)
(72) Inventor: Kim, Jung Han, Seoul 135-906 (KR)
(74) Representative: Simino, Massimo

(57) **Abstract**

A method of manufacturing an abutment of an artificial tooth, which includes an implant fixture installed in a jaw bone and a crown defining a contour thereof. The abutment is fixed to the implant fixture to connect the implant fixture to the crown A three-dimensional image of an oral cavity of a patient is generated on a computer by 3D scanning of a dental plate of plaster. A virtual tooth is designed using the image of the oral cavity, in consideration of a row of teeth in a region from which a tooth is missing, the height of adjacent teeth and alignment, with an upper or lower tooth. The shape of the abutment is designed according to the shape of the designed virtual tooth. Data on the designed abutment is transmitted to a precision machine. The designed abutment is cut using the precision machine to have a one body structure.

## Description

### CROSS REFERENCE TO RELATED APPLICATION(S)

This application claims the benefit of Korean Patent Application No.10-2007-0082916, filed August 17, 2007, entitled *"METHOD FOR MANUFACTURING THE ONE BODY ABUTMENT OF IMPLANT,"* which is hereby incorporated by reference in its entirety into this application.

### BACKGROUND OF THE INVENTION

### Field of the Invention

The present, invention relates to a method of manufacturing an artificial tooth, which can be installed to replace a natural tooth and includes a dental implant fixture, an abutment and a crown. Particularly, the present invention relates to a method of manufacturing the abutment, which connects the dental implant fixture and the crown.

This present invention relates to a met.hod of manufacturing an abutment, in which the abutment is integrally manufactured in a functional, mass-producible manner using a precise cutting machine on the basis of 3D virtual teeth, which take into consideration the individual characteristics of a patient.

### Description of the Related Art

The present invention relates to a method of manufacturing an abutment that is a part of an artificial tooth t.o connect a dental implant fixture and a crown of the artificial tooth.

As is well known in the art, an artificial tooth generally consists of a dental implant fixture, an abutment and a crown. The implant fixture is inserted into the patient's jaw bone chile the crown forms the contour of the artificial tooth, which is designed to have a shape and color similar to or identical with those of a missing tooth. The abutment connects the crown to the implant fixture, and delivers the load from the crown to the implant fixture and thus to the jaw bone. The size, shape and contour of the artificial tooth should be considered when manufacturing of the abutment.

Conventionally, the abutment is manufactured using a casting method (particularly, wax build-up) of obtaining a tooth model from a patient and forming the artificial tooth according to a plaster mold designed on the basis of the shape of the tooth model by a skilled dental technician, or as a ready-made article having standardized dimensions that do not take into consideration the characteristics of the individual patient. A build-up met.hod and a cutting method using a ceramic or zirconia material are used to manufacture an implant., but not frequently.

However, in the case of the casting method for abutment, due to the tolerance between the mold and the finished abutment, a gap occurs at the portion where the abutment is in contact with the gums. Food becomes lodged in the gap, thus causing the tooth to be decayed or leading to an awkward feeling in the oral cavity. Further, in the case of the casting met.hod of making the plaster mold on the basis of the tooth model of the patient in order to manufacture the implant, titanium is generally used for the part of the abutment that is fastened to the implant fixture, and gold is generally used for the part of the abutment that is fastened with the crown. In this manner, two materials are used, thus deteriorating the strength thereof, and the gold, which is expensive, imposes an economic burden on t.he patent. Patent Document 1 discloses an apparatus and method of cast.ing a dental prosthesis in order to prevent casting defects of the dental prosthesis caused by thermal expansion and/or thermal contraction of an embedded member, which improves on the conventional casting method described above. However, the method disclosed in Patent Document 1 also cannot solve the fundamental problem in that it must be subjected to various procedures due to its nature, and in that it makes mass production impossible due to the long manufacturing period.

Since no consideration of the structure of the oral cavity of each patient is made in a mass-produced abutment, the abutment is required to be cut in accordance with the gums of the patient before the crown is put thereon. This cutting process is not only difficult but also time consuming, and also induces fear in the patient.

Most conventional abutments are constructed with threads in the lower end thereof, which engage with the implant fixture. However, such an abutment structure has problems in that the load on a crown is directly delivered to the portion that is engaged with a screw, so that the engaged state of the screw is frequently loosened. In severe cases, the screw itself is broken and escapes from the abutment. Further, when a load is continuously applied to the abutment, for example, in response to repeated chewing, the slightest vibration can naturally loosen the screw from the implant fixture. In such a case, the patient is required to undergo surgery again to receive a new implant, which causes pain and discomfort to the patient.

In order to prevent the above-stated problems, the patient is required to periodically check the engaged state of the screw. This is not only inconvenient and troublesome for both the patient and the doctor, but also causes an economic burden, which cannot be neglected.
Document. 1: Korean Patent No. 10-0644216, titled "*Casting Methods and Equipment of Dental Prostheses*"

### SUMMARY OF THE INVENTION

The present invention has been made to solve the foregoing problems with the prior art, and therefore the present invention is directed to a method of manufacturing an abutment., in which the abutment is integrally manufactured in a functional, mass-producible manner using a precise cutting machine on the basis of 3D virtual t.eeth, which take into consideration the individual characteristics of a patient.

According to an aspect of the invention, there is provided a method of manufacturing an abutment which connects an implant fixture installed in a jaw bone and a crown, defining a contour of a artificial tooth. The method includes the steps of: (a) generating a three-dimensional image of an oral cavity of a patient on a computer by three-dimensional scanning of a dental plate of plaster, obtained from the oral cavity of the patient, in which the implant fixture is installed; (b) designing a virtual tooth using the image of the oral cavity, in consideration of a row of teeth in a region from which a tooth is missing, the height of adjacent teeth and alignment with an upper or lower toot.h; (c) designing the shape of the abutment according to the shape of the designed virtual tooth; (d) transmitting data on the designed abutment to a precision machine; and (e) cutting the designed abutment using the precision machine to have a one body structure.

According to an embodiment of the invention, the abutment is designed in the step (c) so as to include: a cylindrical support bar inserted into t.he implant fixture; a gum-contacting portion integrally extending from one end of the support bar in a shape conforming to that of the gums of the patient; and a cylindrical header integrally extending from the gum-contacting portion and having a curved portion, which engages with the crown.

According to another embodiment of the invention, the abutment is designed in the step (c) so as to include: a screw hole extending through the support bar, the gum-contacting portion and the header; and rotation-preventing projections protruding from the outer circumference of the support bar, in places where the gum-contacting portion meets the support bar.

According to a furt.her embodiment of the invention, the cross-sectional shape of the header is determined based on the shape of the virtual tooth, and the diameter and the height of the header are determined based on the material of the crown and the abutment formed in the step (e).

According to yet another embodiment of the invention, the abutment formed in the step (e) is made of titanium, zirconia or gold.

An abutment manufactured according to the method of the invention is designed according to a virtual tooth. Thus, the abutment can be manufactured to be suitable for the patient's characteristics, and can be constructed into a structure that can optimally support the load on a crown.

Furthermore, since the abutment is manufactured into a one body structure by a precision machine, it can have improved strength and be mass-produced.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a view illustrating a 3D scan image of a set of teeth of a patient with missing teeth;
FIG.. 2 is a view illustrating a design image in which virtual teeth are added to the 3D scan image of FIG. 1;
FIG. 3 is a view illustrating an abutment, which is designed using the virtual tooth shown in FIG. 2;
FIG. 4 is a perspective view illustrating the abutment, which is manufactured according to the invention;
FIG. 5 is a rear perspective view illustrating the abutment, which is manufactured according to the invention; and
FIG. 6 is a cross-sectional view illustrating the state in which the abutment of the invention is coupled with an implant fixture and a crown.

**<Major Reference Numerals of the Drawings>**

| | |
|---|---|
| 3: screw | 5: implant fixture |
| 7: crown | 10: abutment |
| 20: oral cavity image of patient | |
| 30: virtual tooth | 110: header |
| 130: gum-contacting portion | 150: support bar |
| 170: screw hole | 113: curved portion |
| 153: rotation-preventing projection | |

### DETAILED DESCRIPTION OF THE PRESENT INVENTION

Hereinafter, a method of a one body abutment for a dental implant according to the present invention will be described more fully in conjunction with the accompanying drawings, in which exemplary embodiments thereof are shown.

The method of manufacturing a one body abutment 10 for a dental implant according to the invention generally includes steps of designing virtual teeth 30, designing the abutment 10 and forming the abutment 10.

The first step is to design the virtual teeth 30. First, a three dimensional (3D) image 20 is created on a computer by performing 3D scanning on a dental plate of plaster, obtained from the oral cavity of a patient.

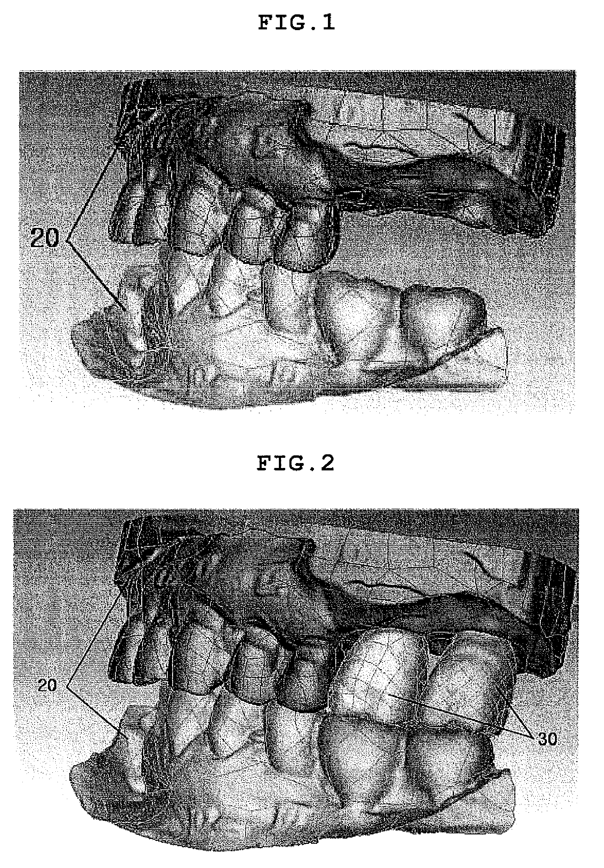

FIG.. 1 shows the 3D image 20 created in this step. As shown in FIG. 1, the 3D image includes jawbones and teeth of the patient., so that correct data on the height, width, row and alignment of adjacent teeth and the shape of the gums can be obtained from the 3D image. Next, a virtual tooth 30 is designed in consideration of the alignment of adjacent teeth based on the 3D image 20 of the oral cavity of the patient.

In this embodiment, the dental plate of plaster is scanned with a laser (in a contact or non-contact manner) to acquire an uneditable/unadjustable 3D mesh, which is then converted into an editable/adjustable face using Cimatron 7.2 to create the virtual teeth 30.

FIG. 2 shows the virtual teeth 30 designed in this step. In the present invention, the virtual tooth 30 is designed in consideration of the 3D scanned image 20 of the oral cavity of the patient, allowing 360 degree rotation and precise design in consideration of the harmony with surrounding teeth, occlusion with upper or lower teeth and the gums.

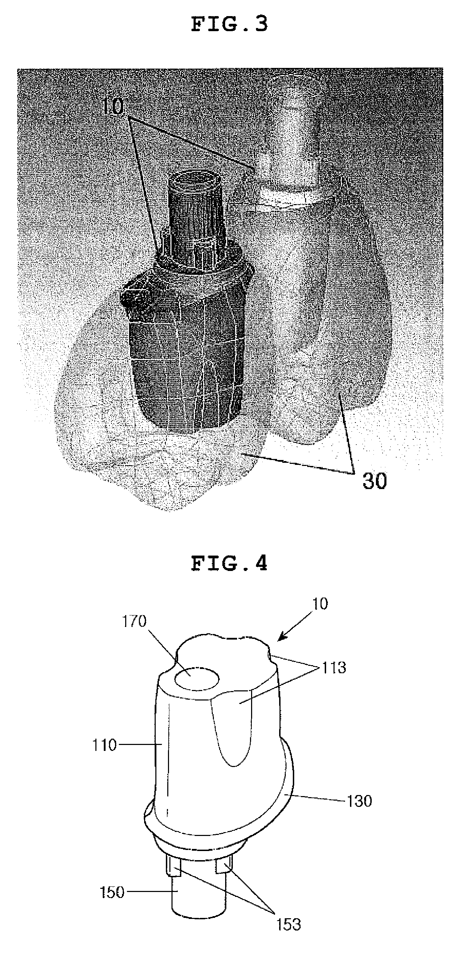

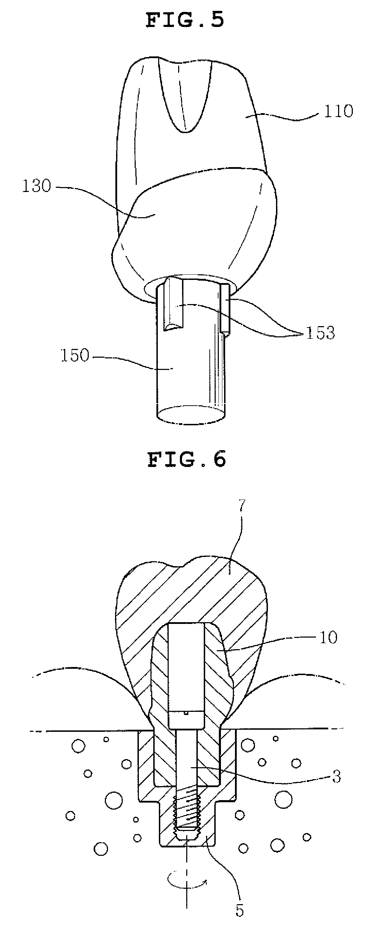

The second step is to design the 3D abutment 10 using the virtual tooth 30. FIG. 3 shows the 3D-designed abutment 10, and FIGS. 4 and 5 show the abutment 10, which is actually manufactured according to an embodiment of the invention. Below, a detailed description will be given of the structure of t.he abutment 10 and an implant fixture 5 with reference to FIGS. 3 t.o 6.

The abutment 10 of the present invention includes a support bar 150 inserted into the implant fixture 5; a gum-contacting portion 130 integrally extending from one end of the support bar 150 in a shape conforming to that of the gums of the patient; a cylindrical header 110 integrally extending from the gum-contacting portion 130 and having a curved portion 113, which engages with a crown 7; a screw hole 170 extending through the abutment 10, particularly, the support bar 150, the gum-contacting portion 130 and the header 110; and rotation-preventing projections 153 protruding from the outer circumference of the support bar 150, in places where the gum-contacting portion 130 meets the support bar 150. The screw hole 170 is formed in consideration of some characteristics of the screw 3, such as t.he size of the head and the diameter of the screw 3, so as not to create any gap between the screw 3 and the abutment 10.

The implant fixture 5 coupled with the abutment 10 is a structure that is installed in the jaw bone of the patient. The implant fixture 5 is coupled with the support bar 150 to support the abutment 10 and the crown 7. The implant fixture 5 has a hole in the center thereof to receive the support bar 150, and is constructed with internal threads. The hole, which receives the support bar 150, is constructed so as to accommodate the rotation-preventing projections 153, which are formed along the outer circumference of the support bar 150. Therefore, the support bar 150 and the rotation-preventing projections 153 of the abutment 10 are inserted into the hole of the implant fixture 5, and the screw 3 is inserted through the screw hole 170 of the abutment 10 and is then engaged with the implant fixture 5 by rotation, thereby being securely coupled with the abutment 10 and the implant fixture 5..

As stated above, the abutment 10 of the invention, connected to the implant fixture 5, can be generally divided into the support bar 150, the gum-contacting portion 130 and the header 110.

The support bar 150 is a part inserted into the implant fixture 5, which is installed in the osseous tissue of the alveolus. Here, the central axis of the support bar 150 is tilted 5 to 7 degrees with respect to the center of t.he hole in the implant fixture 5. As stated, there are depressions around the hole of the implant fixture 5, such that the rotation-preventing projections on the support bar 150 are received in and engaged with the depressions of the implant fixture 5. One end of the support bar 150, which is oriented parallel to the opening of the hole of the implant fixture 5, has a diameter corresponding to the size of an oral cavity region from which a tooth is missing. For example, the diameter may preferably be in the range from 2mm to 7mm. The header 110 extends upward from the support bar 150 and has a diameter corresponding to that of the support bar 150. The support bar 150 and the rotation-preventing projections 153 of the abutment 10 do not have a fixed shape but may be modified into any shapes conforming to any hole shapes of the implant fixture. This is because the support bar 150 and the rotation-preventing projections 153 can be constructed according to designer's data, like other parts of the abutment. 10.

The height of the header 110 is determined in consideration of the lateral occlusion force of the virtual tooth, the length of the implant fixture (e.g., 7mm to 15mm depending on the size of the missing teeth) and the height of the virtual teeth 30. The cross-sectional shape of the header 110 is determined based on the fact that the crown 7, attached to the header 110, may preferably maintain a thickness from 0.4mm to 0.5mm in consideration of lateral occlusion force, strength and aesthetics. In order to maintain the width of the crown 7, the header can have a gap 12mm from the outer sides of the virtual teeth (in x and y axes) and a gap 2mm from the top side of the virtual teeth 30 (in z axis). Furthermore, it is appropriate to form that the curve 113 on the circumference of the header 110 for better and stronger connect.ion with the crown 7.

The gum-contacting portion 130 is a part that comes into direct contact with the gums, and thus has a shape corresponding to the shape of the gums of the patient. In the invention, the shape of the gum-contacting portion 130 is determined by the 3D scanned image 20 of the oral cavity of the patient, from which the tooth is missing, thereby making it unnecessary to design the shape the gum-contacting portion 130. Further, the area and the direction of contact with the gums are determined by the shape of the header 110 As such, when the abutment 10 is manufactured according to the method of the invention, the gum-contacting portion 130 is precisely manufactured according to the shape of the oral cavity region, which is created by the 3D scanned image 20. Accordingly, the artificial tooth having the abutment 10 can be conjugated with the gums without a gap.

The next step is to manufacture the abutment 10 designed as above. Data of the designed abutment 10 is transmitted to a Computer-Aided Manufacturing (CAM) editor, which generates a tool-path and converts the data into mechanical codes (NC data), which are then sent to a precision machine via a server computer. The precision machine refers to a computer controlled machine that includes a Computerized Numerical Control (CNC) machine tool, such as a CNC lathe and a CNC milling machine, and a machine center. The abutment 10 stated herein may be made of titanium, zirconia or gold. Once the material is selected, the precision machine produces the abutment 10 by milling. Titanium (grade 23) was used in this embodiment, and the composition and the mechanical properties of the used material are reported in Tables 1 and 2 below.

**Table 1**

| Chemical composition of Titanium Grade 2.3 | | | | | | | | |
|---|---|---|---|---|---|---|---|---|
| O | N | C | H | Fe | Al | V | Others | Residuals |
| 0.13 | 0.03 | 0.08 | 0.0125 | 0.25 | 5.5-6.5 | 3.5-4.5 | | 0.4 |

**Table 2**

| Mechanical properties of Titanium Grade 2.3 | | |
|---|---|---|
| | Minimum | Average |
| Yield Strength (MPa) | 790 (760) | 825 |
| Ultimate Strength (MPa) | 860 (825) | 895 |
| Growth rate within 50mm, A5 (%) | 10 (7.5) | 15 |
| Reduction rate within region (%) | 25 (15) | |
| Hardness (Hv) | | 350 |
| Elastic modulus (GPa) | | 114 |
| Charpy V-notch impact. (J) | | 24-40 |

Hereinafter, a detailed description will be given of a process of manufacturing the abutment 10 according to an example of the present invention. The precision machine used in this example was Fanuc Robodrill (α-t14iC), and a 16i0M (FANUC Series 16i-M) controller was used.

The abutment 10 was manufactured by 3-axis machining, divided into upper and lower machining.

The lower machining was conducted in the sequence of roughing, finishing and rest-machining, with a piece of material fixed to a jig. The use of the jig provides a wide contact area between the piece of material and the jig, resulting in advantages such as high stability and fixing ability and reduced manufacturing time. F6R0.5 (available from Kaya Tools) as used in the lower machining, in which the roughing took about 2 to 2:11 minutes, the finishing took about 1:30 to 1:55 minut.es, and the rest-machining took about 57 seconds to 1:3 minutes.

After the lower machining, the upper machining was proceeded in the sequence from roughing to finishing, with the abutment 10 turned over and fixed to a jig. F6R0.5 (available from Kaya Tools) was used in the upper machining, in which the roughing took from about 2 minutes to 2 minutes and 11 seconds, and the finishing took from about 2 minutes to 2 minutes and 11 seconds.

The manufactured abutment 10 was fastened to the implant fixture 5 using t.he screw 3, and the crown 7 was attached to the abutment 10 using dental adhesive, thereby accomplishing an artificial tooth.

The method of manufacturing a one body abutment for a dental implant according to the present invention has the following technological characteristics.

Conventional abutment manufacturing methods design abutments relying on the intuition, know-how and experience of a manufacturer, which cannot be standardized, and also lack precision due to hand-made processes. However, the abutment manufacturing method of the present invention designs an abutment using a 3D scan image of the oral cavity of a patient and a virtual toot.h, which is precisely designed based on the 3D scan image. Accordingly, the design of a gum-cont.acting portion and a header can be specified for each patient, in consideration of the structure and the alignment of respective teeth. Specifically, the abutment can be designed by optimally acquiring the gap or direction of the virtual tooth and the abutment based on various data, which are numerically standardized and specified by a computer controlled system. Therefore, the shape of the gum-contacting portion of the abutment correctly conforms to the shape of the gums, so that the artificial tooth can be correctly conjugated with the gums without a gap therebetween. This as a result can prevent a medical incident such as a decayed tooth or gum disease, which is caused by foreign materials clogged in the gap between the gums and artificial teeth. The abutment and the crown of the invention have a high coupling force therebetween to thereby increase the lifetime of a dental implant, and the artificial tooth, having a uniform st.rength can be aligned with an upper or lower tooth, resulting in a low ratio of secondary implant surgery.

Moreover, the abutment support bar of the invention does not have a fixed form but can be modified into various forms according to the shape of the implant fixture. Therefore, patients can make economical and functional considerations when selecting an implant fixture.

The abutment of the invention is fastened with the implant fixture by means of a separate screw, which extends through the central port.ion of the abutment. When compared to existing abutment models manufactured via conventional met.hods, the abutment of the invention can reduce surgery time, simplify a surgical process, and prevent the screw from being loosened. This as a result can guarantee stable fixing of the implant fixture in the alveolus, stable connection between the implant fixture and the abutment, and excellent restorability of the crown using the abutment, which are the most important factors determining clinical usefulness of the dental implant.

Further, the abutment of the invention is manufactured into a one body structure using a precision machine, and thus can be precisely manufactured without error, which would otherwise occur in a conventional casting method of making a plaster mold. An automated manufacturing process can replace a manual process to thereby reduce process t.ime, improve productivity, and enable mass production.

In the convent.ional casting method, the support bar and the head are made of different materials, for example, titanium for the support bar and gold for the head. In contrast, the method of the invention allows the abutment to be made of one material, such as titanium, thereby improving the strength of the abutment and obtaining economic merits.

While the present invention has been described with reference to the particular illustrative embodiments and the accompanying drawings, it is not to be limited thereto, but will be defined by the appended claims. It is to be appreciated that those skilled in the art can substitute, change or modify t.he embodiments in various forms without departing from the scope and spirit of the present invention. Accordingly, it should also be understood that all alterations or modifications derived from the definitions and scopes of the claims and their equivalents fall within the scope of the invention.

## Claims

1. A method of manufacturing an abutment which connects an implant fixture installed in a jaw bone and a crown, defining a contour of a artificial tooth, the method comprising:
(a) generating a three-dimensional image of an oral cavity of a patient on a computer by three-dimensional scanning of a dental plate of plaster, obtained from the oral cavity of the patient, in which the implant fixture is installed;
(b) designing a virtual tooth using the image of the oral cavity, in consideration of a row of teeth in a region from which a tooth is missing, height of adjacent teeth and an alignment with an upper or lower tooth;
(c) designing a shape of t.he abutment according to a shape of the designed virtual tooth;
(d) transmitting data on the designed abutment to a precision machine; and
(e) cutting the designed abutment using the precision machine to have a one body structure.

2. The method according to claim 1, wherein the abutment is designed in the step (c) so as to comprise:
a cylindrical support bar inserted into the implant fixture;
a gum-contacting portion integrally extending from one end of the support bar in a shape conforming to that of gums of the patient; and
a cylindrical header integrally extending from the gum-contacting portion and having a curved portion, which engages with the crown.

3. The method according to claim 2, wherein the abutment is designed in the step (c) so as to comprise:
a screw hole extending through the support bar, the gum-contacting portion and the header; and
rotation-preventing projections protruding from the outer circumference of the support bar, in places where the gum-contact.ing port.ion meets the support bar.

4. The method according to claim 2, wherein the cross-sectional shape of the header is determined based on the shape of the virtual tooth, and the diameter and the height of the header are determined based on the material of the crown and the abutment formed in the step (e).

5. The method according to claim 1, wherein the abutment formed in the step (e) is made of one selected from among the group of titanium, zirconia and gold.

6. An abutment for a dental implant manufactured according to the method as described in any one of claims 1 to 5, wherein the abutment has a one-body structure.
